# EUROPÄISCHE PATENTANMELDUNG

(11) **EP 0 803 285 A2**
(43) Veröffentlichungstag der Anmeldung: **29.10.1997**
(21) Anmeldenummer: 97105991.0
(22) Anmeldetag: 11.04.1997
(51) Int. Cl.: B01J 4/00, B01J 19/20, B01J 19/18

(54) **Übergang von kontinuierlicher zu diskontinuierlicher Prozessstufe, Verfahren und Vorrichtung**

(30) Priorität: 24.04.1996 DE 19616361
(71) Anmelder: BAYER AG, 51368 Leverkusen (DE)
(72) Erfinder: Hetzel, Hartmut, Dr., 50858 Köln (DE); Grenner, Dieter, Dr., 51373 Leverkusen (DE)

(57) **Zusammenfassung**

Es werden ein Verfahren und eine Vorrichtung beschrieben bestehend aus einer kontinuierlichen Prozeßstufe und einer nachgeschalteten diskontinuierlichen Prozeßstufe, wobei der Produktauslaß der kontinuierlichen Prozeßstufe mit einer intervallweise betriebenen Stauvorrichtung versehen ist, so daß auf ein Zwischenpuffergefäß verzichtet werden kann.

## Beschreibung

Zur wirtschaftlichen Herstellung von Produkten der chemischen, pharmazeutischen oder Lebensmittelindustrie ist es erforderlich, eine möglichst unterbrechungsfreie Prozeßkette zu realisieren. Laufen die einzelnen Prozeßstufen dabei kontinuierlich ab, können diese direkt miteinander gekoppelt werden. Dies wird in der Regel angestrebt.

Vielfach ergibt sich jedoch die Notwendigkeit, kontinuierliche Prozeßschritte mit diskontinuierlichen, d.h. chargenweisen, Prozeßschritten zu verbinden. Dies ist regelmäßig dann der Fall, wenn sich der diskontinuierliche Prozeßschritt nur mit hohem technischem Aufwand als kontinuierlicher Prozeßschritt realisieren läßt, z.B. wenn ein Stoffstrom aus festem körnigem Material zwischen Prozeßstufen, in denen unterschiedlicher Gasdruck herrscht, zu fördern ist oder der nachgeschaltete Prozeßschritt ein sehr enges Verweilzeitspektrum erfordert, wie das z.B. bei der Herstellung von polymeren Molekülen gleichen Molekulargewichtes oder Kristallisationsprozessen der Fall sein kann.

Üblicherweise erfolgt die Verknüpfung einer kontinuierlichen Prozeßstufe mit einer nachgeschalteten diskontinuierlichen Prozeßstufe über ein Zwischenpuffergefäß, in das aus der kontinuierlichen Stufe kontinuierlich gefördert wird und aus dem die diskontinuierliche Prozeßstufe chargenweise beschickt wird. Ein solches Puffergefäß ist insbesondere dann technisch aufwendig, wenn für den zu puffernden Produktstrom bestimmte verfahrenstechnische Bedingungen wie Temperatur, Atmosphäre oder Bewegung aufrechtzuerhalten sind.

Aufgabe der vorliegenden Erfindung ist es, eine kontinuierliche Prozeßstufe mit einer nachgeschalteten diskontinuierlichen Prozeßstufe ohne ein zwischengeschaltetes Puffergefäß verfahrenstechnisch zu verknüpfen.

Die Aufgabe wird dadurch gelöst, daß der Produktaustritt aus der kontinuierlichen Prozeßstufe intervallweise mittels einer Stauvorrichtung unterbrochen wird.

Das erfindungsgemäße Verfahren ist insbesondere für kontinuierliche Prozeßstufen geeignet, die in großvolumigen, nur teilweise gefüllten Reaktoren durchgeführt werden, wie z.B. Schneckenmaschinen oder Rührbehältern. Insbesondere vorteilhaft kann das erfindungsgemäße Verfahren dann eingesetzt werden, wenn die Verweilzeit in der kontinuierlichen Prozeßstufe ein mehrfaches der Verweilzeit in der diskontinuierlichen Prozeßstufe beträgt. Bevorzugt soll die Charge der diskontinuierlichen Prozeßstufe weniger als 20 %, insbesondere weniger als 15 %, des Füllvolumens der kontinuierlichen Prozeßstufe betragen, so daß die Verweilzeit in der kontinuierlichen Prozeßstufe durch das Anstauen nur in vertretbarem Rahmen beeinflußt wird.

Ist die erforderliche Verweilzeit in der nachgeschalteten diskontinuierlichen Stufe größer als die zulässige Verweilzeitschwankung in der kontinuierlichen Stufe, kann dem dadurch Rechnung getragen werden, daß zwei oder mehr diskontinuierliche Stufen der kontinuierlichen Stufe nachgeschaltet werden, wobei die Intervallfrequenz der Stauvorrichtung entsprechend verdoppelt bzw. vervielfacht wird. Ferner ist es möglich, für jede nachgeschaltete diskontinuierliche Prozeßstufe eine getrennte Stauvorrichtung vorzusehen, wobei die Stauvorrichtungen phasenverschoben arbeiten.

Als Stauvorrichtungen sind Ventile, insbesondere Schieber bzw. Kolbenventile geeignet, die jeweils intervallweise zur Befüllung der diskontinuierlichen Prozeßstufe geöffnet werden. Während die Stauvorrichtung geschlossen ist, wird die kontinuierliche Prozeßstufe kontinuierlich weiter beschickt, so daß der Füllgrad der kontinuierlichen Stufe etwa um das Chargenvolumen der diskontinuierlichen Stufe ansteigt.

Vorzugsweise erfolgt die Produktentnahme aus der kontinuierlichen Stufe mittels eines Überlaufs, dessen unteres Niveau etwa dem unteren Füllniveau der kontinuierlichen Stufe entspricht. Mittels der Stauvorrichtung wird der Überlauf intervallweise verschlossen bzw. geöffnet.

Im Falle, daß das Produkt der kontinuierlichen Prozeßstufe ein (bevorzugt) festes körniges Material ist, ist es nicht erforderlich, daß die Stauvorrichtung vollständig abdichtet. Es ist in diesem Falle völlig ausreichend, daß der Schüttgutstrom unterbrochen ist. Im Gegenteil ist ein Druckausgleich über die Stauvorrichtung zwischen der kontinuierlichen Prozeßstufe und der Zuleitung zur diskontinuierlichen Prozeßstufe vorteilhaft.

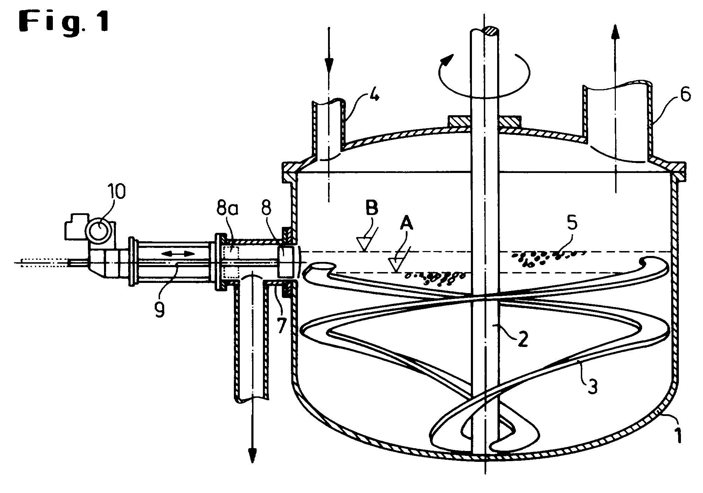

Das Verfahren wird anhand der beigefügten Fig. 1 naher erläutert: Die beispielhaft dargestellte kontinuierliche Prozeßstufe besteht aus einem Behälter 1, in dem sich ein wandgängiger Rührer 3, der über die Rührerachse 2 angetrieben ist, befindet. Beispielsweise dient die kontinuierliche Prozeßstufe zur Eindampfung von Lösungen und/oder Suspensionen zur Trockenmasse. Die einzudampfende Lösung und/oder Suspension wird über das Beschickungsrohr 4 kontinuierlich in den Behälter 1 gefördert. Im Behälter wird ein Bett aus körniger Feststoffmasse 5, die vorzugsweise aus vorher erzeugter Trockenmasse bestehen kann, bei einer Temperatur oberhalb der Verdampfungstemperatur der Lösung und/oder Suspension gehalten. Der Behälter 1 weist ferner ein Dampfabzugsrohr 6 auf, über das das verdampfte Lösungsmittel bzw. Suspensionsmedium abgezogen wird. Im Gasraum über der gerührten Trockenmasse 5 herrscht ein Druck von 10 bis 100 mbar.

Spezielle Eindampfverfahren dieser Art sind beispielsweise in der DE-A 44 30 591 sowie in der nicht vorveröffentlichten DE-A 196 006 30 beschrieben.

In Höhe des Füllniveaus des Behälters 1 ist ein Überlaufrohr 7 angeordnet, über das die durch Eindampfen erzeugte Trockenmasse ausgetragen und beispielsweise einem gerührten Kühlbehälter, der unter Normaldruck betrieben wird, zugeführt wird. Der Kühlbehälter weist eingangs- und ausgangsseitig Ventile auf und wird diskontinuierlich betrieben.

Erfindungsgemäß ist nun vorgesehen, daß das Überlaufrohr 7 mittels einer Stauvorrichtung intervallweise verschlossen werden kann. Beispielhaft dargestellt ist eine Stauvorrichtung, die aus einem in Richtung der Achse 9 mittels Antriebsvorrichtung 10 beweglichen Staukolben 8 gebildet ist. Solange der Kolben 8 sich in Schließfunktion (wie dargestellt) befindet, steigt das Füllniveau des gerührten Bettes vom Füllstand A bis zum Füllstand B an. Wird der Kolben 8 in die Position 8a zurückgefahren, sinkt das Füllniveau des gerührten Behälters 1 sehr schnell vom Füllstand B auf den Füllstand A ab. Die durch das Überlaufrohr 7 austretende Trockenmasse wird ohne Zwischenspeicherung direkt in den diskontinuierlich betriebenen Kühlbehälter eingefüllt. Anschließend wird der Kolben 8 wieder in die Staustellung gefahren, das Einlaßventil des Kühlbehälters geschlossen, der Kühlbehälter belüftet. Nach Abkühlung der Trockenmasse wird das Auslaßventil des Kühlbehälters geöffnet und die abgekühlte Charge entleert.

## Patentansprüche

1. Verfahren zum Betrieb einer kontinuierlichen Prozeßstufe mit einer nachgeschalteten diskontinuierlichen Prozeßstufe ohne zwischengeschaltetes Puffergefäß, dadurch gekennzeichnet, daß der Produktaustritt aus der kontinuierlichen Prozeßstufe mit Hilfe einer Stauvorrichtung intervallweise unterbrochen wird.

2. Verfahren nach Anspruch 1, dadurch gekennzeichnet, daß die kontinuierliche Prozeßstufe in Form eines Schneckenapparates ausgebildet ist.

3. Verfahren nach Anspruch 1, dadurch gekennzeichnet, daß die kontinuierliche Prozeßstufe in Form eines Rührkessels ausgebildet ist.

4. Verfahren nach einem der Ansprüche 1 bis 3, dadurch gekennzeichnet, daß die Stauvorrichtung in Form eines die Produktaustrittsöffnung der kontinuierlichen Prozeßstufe intervallweise verschließenden Kolbenventils ausgebildet ist.

5. Verfahren nach einem der Ansprüche 1 bis 4, dadurch gekennzeichnet, daß das Chargenvolumen des diskontinuierlichen Porzesses 1/20 bis 1/4 des Füllvolumens des kontinuierlichen Prozesses beträgt.

6. Verfahren nach einem der Ansprüche 1 bis 5, dadurch gekennzeichnet, daß das Produkt der kontinuierlichen Prozeßstufe ein festes körniges Gut ist.

7. Kontinuierlich-diskontinuierlicher verfahrenstechnischer Apparat, gekennzeichnet durch eine produktauslaßseitig vorgesehene, intervallweise betreibbare Stauvorrichtung.

8. Vorrichtung bestehend aus einem kontinuierlich beschickbaren verfahrenstechnischen Apparat und einem nachgeschalteten diskontinuierlich arbeitenden verfahrenstechnischen Apparat, wobei das Füllvolumen des kontinuierlich beschickbaren verfahrenstechnischen Apparates das 4- bis 20-fache des Füllvolumens des diskontinuierlichen Apparates beträgt, dadurch gekennzeichnet, daß bei Abwesenheit eines Zwischenpuffergefäßes der Produktstrom des kontinuierlich beschickbaren Apparates direkt in den diskontinuierlichen Apparat förderbar ist und der kontinuierlich beschickbare Apparat am Produktauslaß eine intervallweise betreibbare Stauvorrichtung aufweist.
